# EUROPÄISCHE PATENTSCHRIFT

(11) **EP 1 577 598 B1**
(45) Veröffentlichungstag und Bekanntmachung des Hinweises auf die Patenterteilung: **22.10.2008**
(21) Anmeldenummer: 04101076.0
(22) Anmeldetag: 16.03.2004
(51) Int. Cl.: F16L 37/38

(54) **Anschlusskupplungsstück, insbesondere für die Betankung von Erdgasfahrzeugen**
Coupling element, in particular adapted for the refueling of natural gas driven vehicles
Elément de raccord, adapté en particulier au ravitaillement des véhicules fonctionnant au gaz naturel

(43) Veröffentlichungstag der Anmeldung: 21.09.2005
(73) Patentinhaber: LUXEMBOURG PATENT COMPANY S.A., 7440 Lintgen (LU)
(72) Erfinder: Kremer, Paul, 7263, Walferdange (LU); Risse, Claude, 57310, Bertrange (FR)
(74) Vertreter: Weydert, Robert

(56) Entgegenhaltungen:
- EP-A- 1 271 039
- EP-A1- 0 079 841
- EP-A2- 1 319 884
- FR-A- 965 765
- FR-A1- 2 612 600
- US-A- 2 854 258
- US-A- 5 951 728

## Beschreibung

Die Erfindung bezieht sich auf eine Anschlusskupplung, insbesondere für die Betankung von Erdgasfahrzeugen, zum druckdichten Anschliessen eines Steckadapters eines Gasschlauches oder dergleichen, wobei die Anschlusskupplung einen rohrförmigen Nippel aufweist, an dem eine Anschlusshülse lösbar befestigt ist, und wobei in dem rohrförmigen Nippel eine Rückschlagventileinrichtung angeordnet ist.

Bei einer Anschlusskupplung dieser bekannten Bauform ist die Rückschlagventilteileinrichtung über einen Filter durch die auf den rohrförmigen Nippel aufgeschraubte Anschlusshülse zurückgehalten und bei Entfernung der Anschlusshülse (z.B. zum Austauschen des Filters) wenn die Rückseite des Rückschlagventils unter dem Schliess- oder Rückschlagdruck steht, können die Ventilbauteile und der Filter durch die Druckbeaufschlagung mit hoher Geschwindigkeit aus dem rohrförmigen Nippel herausgeschleudert werden, was zu schweren Unfällen führen kann. Eine solche Gestaltung ist aus der EP 1 271 039 bekannt.

Aufgabe der Erfindung ist es, eine verbesserte Anschlusskupplungstück der eingangs erwähnten Bauform zu schaffen, welches diesen Nachteil nicht aufweist.

Zur Lösung dieser Aufgabe ist das Anschlusskupplungstück gemäß der von Anspruch 1 definierten Erfindung vorgesehen.

Dadurch wird gewährleistet, dass die Rückschlagventilteileinrichtung nicht aus dem Nippel herausgeschleudert werden kann wenn die Anschlusshülse entfernt wird obschon die Rückseite der Rückschlagventileinrichtung durch den Druck in dem Fahrzeugtank beaufschlagt ist.

Dazu ist die Rückschlagventileinrichtung durch eine Halterung zurückgehalten, die zum Ausbauen der Rückschlagventileinrichtung einfach entfernbar ist und aus einer in den Nippel eingeschraubten Ringmutter mit Aussengewinde bestehen kann.

Das Anschlusskupplungstück ist auch mit einem Filter versehen sein und als Halterung könnte z.B. ein Ende des Filters in den Nippel eingeschraubt sein. Dann müsste aber die Halterung zum Auswechseln oder Reinigen des Filters entfernt werden. Gemäss einem weiteren Merkmal der Erfindung ist daher der Filter so angeordnet, damit er ohne Entfernen der Halterung der Rückschlagventileinrichtung auszubauen ist. Dies erlaubt ein gefahrloses Austauschen oder Reinigen des Filters durch Abschrauben der Anschlusshülse, Reinigen und Wiedereinsetzen des Filters oder Einsetzen eines neuen Filters ohne Entfernen der Halterung und Wiederaufschrauben der Anschlusshülse auch wenn die Rückschlagventileinrichtung rückseitig durch den im Fahrzeugtank herrschenden Druck beaufschlagt ist.

Andere vorteilhafte Merkmale der Erfindung sind in weiteren abhängigen Ansprüchen gekennzeichnet.

Eine Ausführungsform der Erfindung wird nun mit Bezug auf die zugehörigen Zeichnungen ausführlicher beschrieben, es zeigen:
Figur 1 eine Vorderansicht der erfindungsgemässen Anschlusskupplung,
Figur 2 eine Ansicht im Längsschnitt in Richtung der Pfeile A-A nach Figur 1;
Figur 3 eine Querschnittansicht in Richtung der Pfeile B-B nach Figur 2.

Wie in den Figuren dargestellt hat die Anschlusskupplung 10 einen rohrförmigen Nippel 12 auf den eine Anschlusshülse 14 aufgeschraubt ist. Ein Dichtring 16 ist vorgesehen, um die Verbindungsstelle zwischen dem rohrförmigen Nippel 12 und der Anschlusshülse 14 abzudichten. In dem rohrförmigen Nippel 12 befindet sich ein Rückschlagventil 18, das einen Ventilkolben aufweist, der durch eine Schraubenfeder 19 gegen einen Dichtring 20 vorgespannt ist. Der Kolben ist auf beiden Seiten der Feder 19 in dem Nippel 12 axial geführt und hat hinter seinem geschlossenen Kopfende mehrere Durchbrüche 23 für die Gasströmung durch den Kolben bei offenem Rückschlagventil 18. Der Dichtring 20 ist zurückgehalten zwischen zwei Halteringen 22 und 24, die zwischen einer Ringmutter 26 mit Aussengewinde und einer inneren Schulter 28 des rohrförmigen Nippels 12 eingespannt sind. Die Ringmutter 26 ist in ein Innengewinde am Ende des rohrförmigen Nippels 12 eingeschraubt. Auf dieses Ende des Nippels 12 ist auch die Anschlusshülse 14 aufgeschraubt. Um das Einschrauben der inneren Ringmutter 26 zu erleichtern hat diese eine vieleckige, z.B. viereckige Bohrung 30 zum Einsatz eines Einschraubschlüssels. Die Ringmutter 26 schliesst bündig mit dem Ende des rohrförmigen Nippels 12 ab. Somit ist das Rückschlagventil in dem rohrförmigen Nippel durch eine von der Anschlusshülse unabhängige, entfernbare Halterung, d.h. die Ringmutter 26 festgehalten.

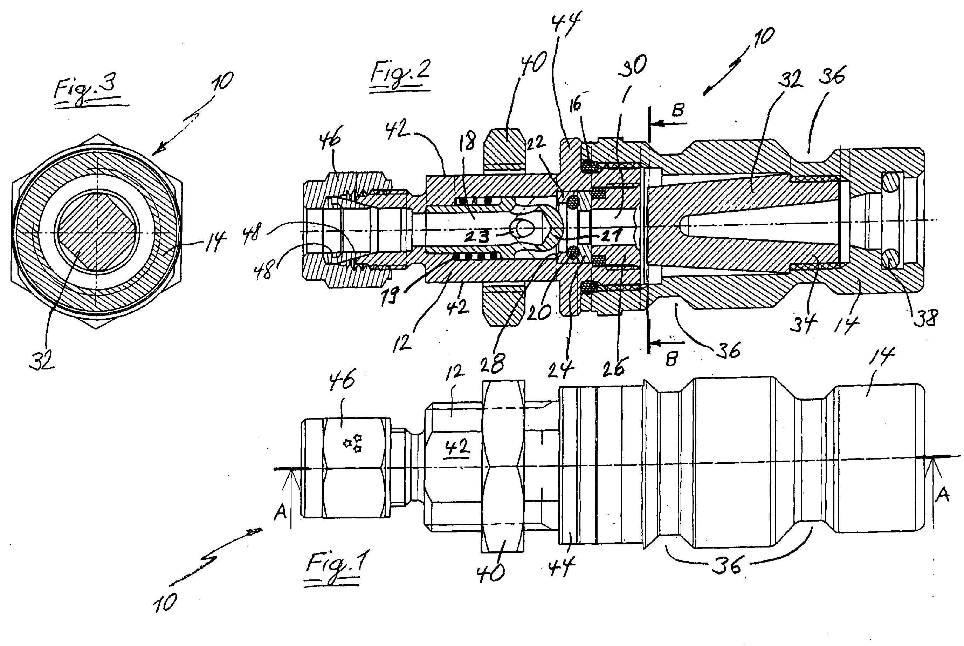

In der Anschlusshülse 14 ist der Filter 32 unabhängig von anderen Bauteilen der Anschlusskupplung 10 lösbar und somit austauschbar befestigt. Hierzu hat der Filter 32 einen Gewindeansatz 34 an seinem dem Rückschlagventil 18 abgewandten Ende. Der Gewindeansatz 34 ist in ein Innengewinde der Anschlusshülse 14 eingeschraubt. Der Filter 32 ist kegelstumpfförmig und in Richtung zum Rückschlagventil 18 verjüngt. Das freie Ende des Filters 32 ist durch Abflachungen etwa vierkantförmig geformt, siehe Figur 3, damit der Filter 32 mit einem Steckschlüssel oder anderem Werkzeug eingeschraubt werden kann. Das freie Ende des Filters 32 befindet sich in der Nähe der inneren Ringmutter 26, ist aber nicht in Berührung mit derselben. Zum Austauschen oder Reinigen des Filters 32 wird die Anschlusshülse 14 von dem rohrförmigen Nippel 12 abgeschraubt. Die Ringmutter 26 wird dabei nicht entfernt, d.h. das Rückschlagventil 18 wird durch die Ringmutter 26 zurückgehalten und wird durch den im Fahrzeugtank herrschenden Druck in Schliessstellung gehalten.

Auf der Aussenfläche der Anschlusshülse 14 befindet sich mindestens ein Anschlussprofil oder eine ringförmige Umfangsnut 36 zum Anschliessen eines Steckadapters. Zwei in axialem Abstand voneinander angeordnete Umfangsnuten 36 können auch vorgesehen sein, um unterschiedliche standardisierte Steckadapter anschliessen zu können. Des Weiteren sitzt am Einlassende der Anschlusshülse 14 ein Dichtring 38 zur dichten Anlage an einem Bauteil der Steckkupplung.

Auf der Aussenseite des rohrförmigen Nippels 12 befindet sich eine Befestigungsmutter 40 mit Innengewinde, die auf ein Aussengewinde des Nippels 12 aufgeschraubt ist. Der Aussengewindeteil hat gegenüberliegende Abflachungen 42 zum Ansetzen eines Schlüssels, um die Anschlusskupplung beim Befestigen an einem Fahrzeugbauteil (nicht dargestellt) gegen Rotation festzuhalten.

Am Ausströmende des rohrförmigen Nippels 12 befindet sich eine Überwurfmutter 46 mit Klemmringen 48 zum dichten Anschluss einer zu einem Gasbehälter (nicht dargestellt) führenden Leitung.

Die Erfindung ist nicht auf das hierin ausführlich beschriebene Ausführungsbeispiel beschränkt, sondern es können vom Fachmann viele Änderungen vorgenommen werden, ohne dadurch den durch die Ansprüche festgelegten Schutzumfang der Erfindung zu verlassen.

## Patentansprüche

1. Anschlusskupplungsstück, insbesondere für die Betankung von Erdgasfahrzeugen, zum druckdichten Anschliessen eines Steckadapters eines Gasschlauches oder dergleichen, wobei das Anschlusskupplungsstück einen rohrförmigen Nippel (12) aufweist an dem eine Anschlusshülse (14) lösbar befestigt ist, und wobei in dem rohrförmigen Nippel (12) eine Rückschlagventileinrichtung angeordnet ist, und das Anschlusskupplungsstück einen Filter (32) auf der Öffnungsdruckseite der Rückschlagventileinrichtung aufweist, **dadurch gekennzeichnet, dass** die Rückschlagventileinrichtung in dem Nippel (12) durch eine von der Anschlusshülse (14) und dem Filter (32) unabhängige Halterung zurückgehalten ist, die ein Herausschleudern der Rückschlagventileinrichtung aus dem Nippel unter der Schliessdruckbeaufschlagung der Rückschlagventileinrichtung verhindert wenn die Anschlusshülse (14) mit dem Filter (32) von dem Nippel entfernt wird, und dass der Filter (32) lösbar in der Anschlusshülse (14) befestigt ist und der Filter (32) mit der Anschlusshülse (14) ohne Entfernen der Halterung auszubauen ist.

2. Anschlusskupplungstück nach Anspruch 1, **dadurch gekennzeichnet, dass** die Halterung eine in den rohrförmigen Nippel (12) eingeschraubte Ringmutter (26) mit Aussengewinde ist.

3. Anschlusskupplungsstück nach Anspruch 2, **dadurch gekennzeichnet, dass** die Ringmutter (26) eine vieleckige, z.B. viereckige Bohrung (30) aufweist zum Einsatz eines Einschraubschlüssels.

4. Anschlusskupplungsstück nach Anspruch 2 oder 3, **dadurch gekennzeichnet, dass** zwischen der Ringmutter (26) und einer Innenschulter (28) des rohrförmigen Nippels (12) zwei Halteringe (22, 24) eingespannt sind, die einen Dichtring (20) der Rückschlagventileinrichtung festhalten.

5. Anschlusskupplungsstück nach Anspruch 4, **dadurch gekennzeichnet, dass** die Rückschlagventileinrichtung einen Ventilkolben (18) aufweist, der durch Federkraft in Richtung zum Dichtring (20) vorgespannt ist.

6. Anschlusskupplungsstück nach einem der Ansprüche 1-5, **dadurch gekennzeichnet, dass** der Filter (32) einen Gewindeansatz (34) an seinem der Rückschlagventileinrichtung abgewandten Ende aufweist, und der Gewindeansatz (34) in die Anschlusshülse (14) eingeschraubt ist.

7. Anschlusskupplungsstück nach einem der Ansprüche 1-6, **dadurch gekennzeichnet, dass** der Filter (32) kegelstumpfförmig und in Richtung zu der Rückschlagventileinrichtung verjüngt ist.

8. Anschlusskupplungsstück nach einem der Ansprüche 1-7, **dadurch gekennzeichnet, dass** der Filter (32) an seinem dem Einschraubende gegenüberliegenden Ende Abflachungen aufweist zum Ansetzen eines Einschraubwerkzeuges.

9. Anschlusskupplungsstück nach einem der Ansprüche 1-8, **dadurch gekennzeichnet, dass** auf der Aussenfläche der Anschlusshülse (14) mindestens ein Anschlussprofil (36) für einen Aufsteckadapter vorgesehen ist.

10. Anschlusskupplungsstück nach einem der Ansprüche 1-9, **dadurch gekennzeichnet, dass** die Anschlusshülse (14) auf den rohrförmigen Nippel (12) aufgeschraubt ist.

## Claims

1. A connector coupling piece, in particular for fuelling natural gas-fuelled vehicles, for the pressure-tight connection of a plug adapter of a gas pipe or similar, wherein the connector coupling piece has a tubular nipple (12) to which a connection sleeve (14) is detachably fastened, and wherein a non-return valve device is arranged in the tubular nipple (12), and the connector coupling piece has a filter (32) on the opening pressure side of the non-return valve device, **characterized in that** the non-return valve device is restrained by a mounting that is independent of the connection sleeve (14) and the filter (32), said mounting preventing the non-return valve device from sliding out of the nipple under the closing pressure applied by the non-return valve device when the connection sleeve (14) together with the filter (32) is removed from the nipple, and that the filter (32) is detachably fastened in the connection sleeve (14) and the filter (32) together with the connection sleeve (14) can be dismounted without the removal of the mounting.

2. The connector coupling piece according to Claim 1, **characterized in that** the mounting is a ring-nut (26) with an external thread, screwed into the tubular nipple (12).

3. The connector coupling piece according to Claim 2, **characterized in that** the ring-nut (26) has a polygonal, e.g. rectangular drilled hole (30), for the insertion of a screwing key.

4. The connector coupling piece according to Claim 2 or 3, **characterized in that** two retaining rings (22, 24) are clamped in between the ring-nut (26) and an inner shoulder (28) of the tubular nipple (12), which rigidly hold a sealing ring (20) of the non-return valve device.

5. The connector coupling piece according to Claim 4, **characterized in that** the non-return valve device has a valve piston (18) which is pre-tensioned by elastic force in the direction towards the sealing ring (20).

6. The connector coupling piece according to any one of Claims 1-5, **characterized in that** the filter (32) has a connecting portion for a thread (34) on the end facing away from the non-return valve device, and said connecting portion for a thread (34) is screwed into the connection sleeve (14).

7. The connector coupling piece according to any one of Claims 1-6,
**characterized in that**
the filter (32) has the shape of a frustum and tapers in the direction of the non-return valve device.

8. The connector coupling piece according to any one of Claims 1-7, **characterized in that** the filter (32) has flattenings on the end opposite to the screw-in end, for attaching a screwing tool.

9. The connector coupling piece according to any one of Claims 1-8, **characterized in that** the at least one connection profile (36) for an attachment adapter is provided on the outer surface of the connection sleeve (14).

10. The connector coupling piece according to any one of Claims 1-9, **characterized in that** the connection sleeve (14) is screwed on to the tubular nipple (12).

## Revendications

1. Pièce de raccord de jonction, notamment pour le ravitaillement de véhicules fonctionnant au gaz naturel, pour le raccordement étanche à la pression d'un adaptateur à enficher d'un tuyau flexible de gaz ou similaire,moyennant quoi la pièce de raccord de jonction présente un mamelon (12) tubulaire sur lequel un manchon de raccordement (14) est fixé de manière amovible, et moyennant quoi un dispositif de soupape anti-retour est disposé dans le mamelon (12) tubulaire, et la pièce de raccord de jonction présente un filtre (32) sur le côté de pression d'ouverture du dispositif de soupape anti-retour, **caractérisée en ce que** le dispositif de soupape anti-retour est retenu dans le mamelon (12) par un support indépendant du manchon de raccordement (14) et du filtre (32), lequel empêche un glissement du dispositif de soupape anti-retour hors du mamelon sous la sollicitation par la pression de fermeture du dispositif de soupape anti-retour lorsque le manchon de raccordement (14) avec le filtre (32) est séparé du mamelon, et **en ce que** le filtre (32) est fixé de manière amovible dans le manchon de raccordement (14) et le filtre (32) avec le manchon de raccordement (14) peut être démonté sans retirer le support.

2. Pièce de raccord de jonction selon la revendication 1, **caractérisée en ce que** le support est un écrou à oeil (26) avec filetage extérieur vissé dans le mamelon (12) tubulaire.

3. Pièce de raccord de jonction selon la revendication 2, **caractérisée en ce que** l'écrou à oeil (26) présente un alésage (30) polygonal, par exemple quadrangulaire destiné à recevoir une clé de vissage.

4. Pièce de raccord de jonction selon la revendication 2 ou 3, **caractérisée en ce que** entre l'écrou à oeil (26) et un épaulement intérieur (28) du mamelon (12) tubulaire, deux bagues de retenue (22,24) sont maintenues par serrage, lesquelles immobilisent une bague d'étanchéité (20) du dispositif de soupape anti-retour.

5. Pièce de raccord de jonction selon la revendication 4, **caractérisée en ce que** le dispositif de soupape anti-retour présente un piston de soupape (18), qui est précontraint par une force de ressort dans la direction de la bague d'étanchéité (20).

6. Pièce de raccord de jonction selon une des revendications 1 à 5, **caractérisée en ce que** le filtre (32) présente un embout à filetage (34) sur une extrémité qui se détourne du dispositif de soupape anti-retour, et l'embout à filetage (34) est vissé dans le manchon de raccordement (14).

7. Pièce de raccord de jonction selon une des revendications 1 à 6, **caractérisée en ce que** le filtre (32) est en forme de tronçon et s'amincit dans la direction du dispositif de soupape anti-retour.

8. Pièce de raccord de jonction selon une des revendications 1 à 7, **caractérisé en ce que** le filtre (32) présente des méplats sur son extrémité faisant face à l'extrémité de vissage afin d'appliquer un outil de vissage.

9. Pièce de raccord de jonction selon une des revendications 1 à 8, **caractérisée en ce que** sur la surface extérieure du manchon de raccordement (14), au moins un profilé de raccordement (36) destiné à un adaptateur à enficher est prévu.

10. Pièce de raccord de jonction selon une des revendications 1 à 9, **caractérisée en ce que** le manchon de raccordement (14) est vissé sur le mamelon (12) tubulaire.
